# EUROPEAN PATENT SPECIFICATION

(11) **EP 2 954 603 B1**
(45) Date of publication and mention of the grant of the patent: **20.04.2016**
(21) Application number: 14705490.2
(22) Date of filing: 07.02.2014
(51) Int. Cl.: H02G 9/06

(54) **A TUBULAR INSULATION DEVICE, A HIGH VOLTAGE POWER ARRANGEMENT AND A METHOD FOR PROVIDING AN INSULATED HIGH VOLTAGE POWER CABLE**
ROHRFÖRMIGE ISOLIERVORRICHTUNG, HOCHSPANNUNGSSTROMKABELANORDNUNG UND VERFAHREN ZUR BEREITSTELLUNG EINES ISOLIERTEN HOCHSPANNUNGSSTROMKABELS
DISPOSITIF D'ISOLATION TUBULAIRE, AGENCEMENT D'ALIMENTATION À HAUTE TENSION ET PROCÉDÉ PERMETTANT DE FOURNIR UN CÂBLE D'ALIMENTATION HAUTE TENSION ISOLÉ

(30) Priority: 07.02.2013 WO PCT/EP2013/052366
(43) Date of publication of application: 16.12.2015
(73) Proprietor: ABB Technology Ltd., 8050 Zürich (CH)
(72) Inventor: ZANT, Nikolaus, 27604 Raleigh, NC (US); ROCKS, Jens, CH-8807 Freienbach (CH); HO, Chau-Hon, 79540 Lörrach (DE); OUDALOV, Alexandre, CH-5442 Fislisbach (CH); GREMAUD, Robin, CH-3007 Bern (CH); KORNMANN, Xavier, 79787 Lauchringen (DE); KAUFMANN, Patrik, CH-5400 Baden-Dättwil (CH); HERRMANN, Lorenz, CH-5200 Brugg AG (CH); LOGAKIS, Emmanuel, CH-5405 Baden-Dättwill (CH); SCHNEIDER, Marco, CH-5303 Würenlingen (CH)
(74) Representative: Axell, Kristina
(86) International application number: PCT/EP2014/052390
(87) International publication number: WO 2014/122244

(56) References cited:
- EP-A1- 1 585 204
- US-A1- 2011 041 944

## Description

### Technical Field

The present invention relates in a first aspect to an elongated tubular electrical insulation device for a cable.

In a second aspect the invention relates to a high voltage power cable arrangement comprising a plurality of elongated conductor segments placed alongside one another to form an inner electrical conductor of a high voltage power cable, and an elongated tubular electric insulation device arranged to house and surround the inner electrical conductor.

In a third aspect the invention relates to a method for providing a flexible insulated high voltage cable.
A conductor segment is to be understood as a segment which is to be joined to another conductor segment at the respective end, and which together with other alongside extending conductor segments form the conductor. A power cable segment is to be understood as a segment which is to be joined to another cable segment at the respective end.

### Background of the Invention

The development of technologies for long distance power transmission or distribution is in general driven by the need of connecting remote renewable power generation facilities, e.g. large solar parks, several connected wind parks or large hydropower plants, to large load centers. In addition, there is an industry trend of interconnecting different electric power systems. In prior art, electric power transmission for capacities above 3 GW is in general limited to overhead lines as the only economically affordable option. However, high, or extra high, voltage overhead transmission lines cause visual, electric and magnetic pollution where they pass close to/inside densely populated areas. Further, overhead transmission lines require a large corridor and thus require land for installation, which is problematic in densely populated areas, where the price of the land is high and thus generates costs. Thus, using underground and submarine power cables for electric power transmission is an attractive alternative, as the cables do not require any pylons and are installed as underground cables and are thus not visible. However, scaling-up underground and subsea power cables, in order to increase the transmission of electric power, is limited due to limits of inner conductor size and cable insulation thickness. The electric power transmitted in a high capacity transmission system can be increased by increasing the voltage or the current. Higher voltages, without increasing the electric field, require an increase of the thickness of the electric power cable insulation. Achieving higher currents, without increasing the thermal load on the cable insulation, require an increase of the cross-section area of the electric power cable's inner electrical conductor or require a material with higher conductivity for the inner electrical conductor.

The inventors of the present invention have identified that the factor that limits the scale-up of prior art power cable technology is the fact that the cross-section area of a prior art power cable cannot be increased without sacrificing overall flexibility of the power cable, which in turn results in that the length of a produced power cable segment has to be reduced, as the inflexibility of the power cable with the increased cross-section area makes it too difficult to transport, or prevents the transportation of, too long power cable segments from the production site to the site of installation. In general, electric power cables may be produced by way of extrusion in a cable extrusion line, and it is desirable to produce the extruded power cable segments as long as possible to keep the number of joints on the site of installation to a minimum. A reduction of the length of the power cable segments results in an increase of the number of joints for joining the power cable segments in order to install the entire power transmission line. Therefore, the installation time is prolonged, and the long-term electric reliability of the power transmission or distribution system in operation decreases with an increase of the number of joints.

US 5,043,538 describes a water impervious cable construction which includes a central electrical conductor, an overlayer of insulation material such as a plastic, a shield layer formed of a plurality of individual conductors, the shield layer being embedded in a layer of semiconducting material, a layer of overlapped moisture barrier metal foil material, and a further overlayer of insulating material.

WO 02/27734 discloses an electrical cabling system for the transmission of power over distances. The cabling system includes a set of extruded aluminium tube conductors.

US 4,298,058 describes a moisture-proofing electrical cable comprising three stranded-together insulated conductors enveloped in a rubber-elastic inner sleeve on which sits a corrugated twin tube arrangement of an inner copper tube and an outer steel tube.

US 7,999,188-B2 discloses a cable for transporting or distributing electric energy, especially medium or high voltage electric energy, including an electrically insulating layer surrounding an electrical conductor, and a sheath surrounding the electrically insulating layer. It is disclosed that the sheath is configured to guarantee improved flexibility without impairing mechanical properties and particularly thermopressure resistance.

EP1585204 discloses a cable arrangement for AC transmission where an installation duct houses the cables for three phases. Each phase cable has its own insulation. The installation duct consists of an inner screen of metal that is thick enough to ensure grounding. The cable is assembled at site, whereby the installation duct attains is circular shape from a planar band when rolled around the phase cables and welding the band sides together. The transportation is facilitated since the duct-to-be can be wound as a band.

### Summary of the Invention

The object of the present invention is to increase the electric power transmitted by a power cable, especially a power cable for submarine installation or for installation on land, e.g. an underground cable, without any reduction of the length of the produced power cable segments with regard to limitations of the transportation of the power cable.

The above mentioned object of the present invention is according to the first aspect of the invention attained in that a tubular electrical insulation device of the kind specified in the preamble of the independent claim related to a tubular electrical insulation device for a cable includes the specific features specified in the characterizing portion of the independent claim related to a tubular electrical insulation device for a cable. Thus the tubular electric insulation device is arranged for receiving a plurality of electrical conductors segments by insertion, which tubular electrical insulation device is flexible and comprises an inner circumferential electrically conductive layer for establishing an electric contact to the electrical conductors once inserted into the tubular electrical insulation device.

It is supposed to be clear from the context that by flexible is meant flexibility in any plane through the center line of the insulation device, i.e. the flexibility allows the insulation device to be bent. Generally the insulation device according to the invention can be bent in the order of 1:6,25 to 1:25, typically in the order of 1:10 to 1:15. The bendability is measured as the relation between the diameter of the insulation device and the possible bending radius. The possible bending radius corresponds to the radius to which the insulation device can be bent without using excessive force for wounding at that radius without significant deformation, cracks or other defects.

According to the invention the insulation device thus is an entity that is separate from the conductor, and into which the conductor can be inserted to form a cable. The invented insulation device thereby in an advantageous way provides an essential component for obtaining a high-voltage power cable for transmitting very high electrical power.

By the invented insulation device it will be possible to attain a cable that allows much higher power than can be achieved with a conventional cable without resulting in undue short cable segments. For transmitting electrical power in the magnitude above 1 GW with conventional cable technique it requires either to increase the voltage to a level that creates problems of the kind discussed above or to use a plurality of cables in parallel. The alternative to have a "moderate" high voltage such as 320 kV and use one single cable would result in such a high conductor area that a conventional cable could not be bent to be transported on a drum. The consequence would be very short cable segments and a large number of joints. With a cable provided with an insulation device according to the invention this is avoided.

The principles of the present invention can be summarized as:
- to increase the current by increasing the conducting cross sectional area and keeping the high voltage "moderate",
- to separate the solid insulation tube from the conductor strand,
- thereby achieving long segments, and
- thereby reducing the number of joints per transmitted GW/km.

The bending properties of a cable formed with the use of the insulation device allow transportation of the assembled cable rolled on a drum and with a segment length of some hundred meters.

The specific construction of the insulation device also makes it possible to alternatively assemble the cable on site whereby the conductor segments and the Insulation device are transported individually to the site. Thereby the individual unassembled parts transport is lighter, and the transport weight limitation (e. g. 32 tons for road transport) is reached at much longer segment length.

If for example a power of 3 GW is to be transmitted with conventional cable technique at a voltage of 320 kV it would require five cables in parallel in order to obtain the sufficient conductive area without the cables being too stiff to be bended for transportation.

With a cable having an insulation device according to the invention only one single cable is required and which can be transported assembled with a cable segment length of above 300 meters. The total weight of such a sector will be about 32 t and can be transported on one truck.

When transporting the insulation device according to the present invention unassembled with the conductor segments that are to be inserted, the cable segments can be increased to almost 700 meters in this example, since in that case it is the weight of the insulation device alone that has to match the weight limitation.

The cable that can be provided with the invented insulation device in this example replaces five conventional cables. This results in that the production costs will be reduced, and so also the required space for the cable trench.

According to a preferred embodiment of the invented insulation device, it is that flexible that it can be coiled on a drum for transportation.

This criterion represents a well-defined degree of the flexibility with reference to the maximum conventional size of standard cable transportation drums. This degree of flexibility assures that the beneficial effects of the invented insulation device are taken advantage of with regards to essential aspects.

According to a further preferred embodiment, the inner circumferential electrically conductive layer is dimensionally stable such that its ring-shaped cross-section is maintained when coiled on the drum for transportation.

By in this way avoiding any deformation of the cross-section of the insulation device during transport secures a proper condition of the insulation device when it is to be assembled at the assembly site and eliminates any need to reshape-squeeze it at the site for facilitating the insertion of the conductor segments.

According to a further preferred embodiment, the electrical insulation device is that flexible that its bending radius is in a range of 4 to 20 times the outer diameter of the tubular electrical insulation device.

Preferably that range is 4 to 10 times.

The specified range for the bending radius, in particular the narrow range, represents a bending property that is optimized for the purpose of the present invention in consideration on one hand the transport aspect and on the other hand other practical aspects such as the stability. It is to be understood that the term bending radius in this context means the radius to which the insulation device can be bent without using excessive force or injuring the insulation device.

According to a further preferred embodiment, the inner circumferential electrically conductive layer of the tubular electrical insulation device is a corrugated tube or a strip wound hose.

This is a particular suitable and convenient way of attaining the flexibility of the inner layer.

According to a further preferred embodiment, the tubular electrical insulation device is produced by extrusion. Typically it is thus seamless in a longitudinal direction defined by the overall tubular shape of the tubular electrical insulation device.

According to a further preferred embodiment, the electrical insulation device comprises at least one circumferential electrical insulator located outside of and surrounding the electrically conductive inner layer, and a circumferential electrically conductive outer layer located outside of and surrounding the at least one circumferential electrical insulator.

By means of this embodiment, a flexible and efficient cable insulation system is provided, which is suitable for the inventive concept provided by the present invention, i.e. the transportation of the cable members unassembled and the assembly of the cable members on site. By means of this embodiment, the electric field generated by the current-carrying inner electrical conductor can be efficiently controlled and well defined. The at least one circumferential electrical insulator may comprise one or a plurality of circumferential electrical insulators. At least one of the electrically conductive inner and outer layers may be semiconductive. Outside the outer conductive layer other circumferential layers may be added e.g. as environmental protection.

According to a further preferred embodiment, each of the electrically conductive inner and outer layers is made of a metal or a metal composition, or made of an electrically conductive polymer or polymer composition.

According to a further preferred embodiment, the electrically conductive inner and outer layers are arranged to form a protective barrier protecting the at least one circumferential electric insulator from moisture and mechanical abrasion.

This embodiment is suitable for the inventive concept provided by the present invention, where the power cable is assembled on site, as the electrical insulator of the electrical insulation device is protected both at the inside and at the outside during the transportation of the electrical insulation device and the plurality of elongated electrical conductor segments unassembled. Further, during the assembly of the electrical insulation device and the plurality of elongated electrical conductor segments, the electrical insulator of the electrical insulation device is also protected from any mechanical abrasion effected by the plurality of elongated electrical conductor segments. By means of this embodiment, a flexible and efficient cable insulation system is provided.

According to a further preferred embodiment, at least one of the electrically conductive inner and outer layers is covered on the outside and/or on the inside with a semiconductive material.

Preferably both of the layers are covered. With a semiconductive material in this context is meant a semiconductive material following the definition that it has low electrical conductivity but on the other hand conducts electricity better than an insulating material.

According to a further preferred embodiment, the electrical insulation capacity is such that it can be used in a high voltage power cable.

This embodiment reflects that the advantages of the present invention are particularly pertinent for such application. The invention is particularly of interest for ultra-high voltage such as voltage levels at 320 kV and above. Preferably the thickness of the insulation layer is larger than 30 mm. In particular the layer is at least 60 mm thick, which is suitable for ultra-high voltage applications.

According to a further preferred embodiment, the inner layer has an internal diameter of at least 80 mm, preferably at least 120 mm.

The large internal diameter allows to house conductor segments of a total conductive cross sectional area little less than 5 000 mm² at a fill-ratio of 90%. Often when applying the invention, however, the requirement of the conductive cross sectional area will be much higher and the fill-ratio will be lower. For example for a 3 GW-transmission the conductive cross-sectional area may be 21 000 mm² and the fill-ratio 50%. This requires the internal diameter to be around 230 mm. A preferred range of the internal diameter is 80 to 400 mm, preferably 120 to 250 mm. The internal diameter may vary in the longitudinal direction, e. g. when the inner layer is a corrugated tube. In that case the term "internal diameter" relates to the minimum appearing internal diameter. The term fill-ratio is defined further below.

The above specified preferred embodiments of the invented tubular electrical insulation device are specified in claims dependent from the independent claim related to a tubular electrical insulation device for a cable.

According to the second aspect of the invention, the object is attained in that a high voltage power cable arrangement of the kind specified in the preamble of the independent claim related to a high voltage cable arrangement includes the specific features specified in the characterizing portion of the independent claim related to a high voltage cable arrangement. The cable arrangement thus is provided with a tubular electric insulation device according to the present invention, in particular according to any of the preferred embodiments thereof.

The invented high voltage power arrangement has advantages of similar kind as those of the invented insulation device and the preferred embodiments thereof and which have been described above.

It is to be understood that the plurality of conductor segments may be bundled together, e.g. by tape, wire or the like in order to simplify insertion of the conductor segments into the insulation device.

According to a preferred embodiment of the invented high voltage power cable arrangement, at least one conductor segment of the conductor is in electrical contact with at least another along-side extending conductor segment of the conductor.

Although, the invention may be applied also when the cable contains conductor segments that are insulated from each other, the advantages of the invention are of primary interest when the conductor segments are in electrical contact with each other to form a common conductor, in particular when all conductor segments are in electrical contact with each other.

According to a further preferred embodiment, the individual electrical conductor segments are that flexible that they can be coiled on a drum.

According to a further preferred embodiment, the individual electrical conductor segments are that flexible that their bending radius is such that the conductor segments fit the bendability of the insulation device according the embodiment above specifying the wider range for the bendability thereof.

According to a further preferred embodiment, the bending radius of the individual electrical conductor segments is such that the conductor segments fit the bendability of the insulation device according the embodiment above specifying the narrower range for the bendability thereof.

The embodiments mentioned next above have advantages of similar kind as the embodiments of the invented tubular electrical insulation device that relate to the bending properties thereof. The clarifications regarding what is meant by flexible and by bending radius is presented above in connection with the insulation device, and these are relevant also to the cable. Typically the bending radius of the conductor segments will be in a range of about 5 to 25 times, and 5 to 12,5 times, respectively, of the outer diameter of the tubular electrical insulation device.

According to a further preferred embodiment, the plurality of elongated electrical conductor segments is at least partly loosely arranged in relation to the insulation device such that electrical conductor segments can move relative to the insulation device when the high voltage power cable arrangement is bent.

By loosely arranged is meant that the conductor segments are not fixed or attached to the inner periphery of the insulation device as is the case with a conventional extruded cable. This, however, does not exclude that the conductor segments are in contact with the inner periphery of the insulation device. The conductor parts may be loosely arranged along the entire length but may alternatively be attached to the inner periphery of the insulation device at certain spots along the cable.

According to a further preferred embodiment, the number of along-side extending conductor segments of the conductor is at least four.

The larger the number of conductor segments is, the more the benefits regarding to achieve high bendability is for a given total conductor cross sectional area. From this point of view it is therefore advantageous to have multiple conductor segments, such as four or more. Other considerations may give reasons to limit the number of conductor segments. In practice the number of conductor segments will not exceed 100 . However, in most cases the bendability of the insulation device is the limiting factor, whereby normally a low number of conductor sectors is sufficient with respect to the bendability criterion.

According to a further preferred embodiment, the conductive cross sectional area of the conductor is at least 3 000 mm², preferably at least 5 000 mm².
This is the sum of the conductive cross sectional areas of the conductor segments. As is supposed to be understood, the benefits of the present invention is larger, the larger the power is and thus the larger the conductive cross sectional area is for a given voltage. This is why it is preferred to apply the invention for cross sections above the specified. The advantages are most pertinent when the conductive cross sectional area is above 10 000 mm² and in particular above 20 000 mm². The invention may be applied for conductive cross sectional areas up to twice and even five times that figure.

According to a further preferred embodiment, the internal cross sectional area of the insulation device is the sum of the conductive cross sectional area of the conductor and an excess cross sectional area, which excess cross sectional area is at least 10 % of said internal cross sectional area of the insulation device.

The excess cross sectional area may completely be formed by a void space, but may also include non-conductive components housed within the electrically insulating device such as insulation around one or more of the conductor segments.

In order to allow the assembly of the cable, either before transportation or at the site, there should be a certain excess space within the insulation device such that the conductor segments can be inserted. The more excess space, the easier the insertion will be. On the other hand it is of interest to attain a sufficient fill-ratio so as to minimize the diameter of the insulation device for a given conductive cross sectional area. The specified minimum value for the excess cross sectional area in most cases will make the insertion of the conductor segments easy. For various reasons the fill-ratio will normally be lower than the 90 % that corresponds to the specified minimum value of the cross sectional excess area. A fill-ratio of 30 % or even 20 % may be applied, with a corresponding higher figure for the excess cross sectional area. Preferably, when taking various aspects into consideration, the excess cross sectional area is in the range of 20 to 50%. The fill-ratio is the ratio between the cross sectional area of the conductor and the internal cross sectional area of the insulation device. A fill-ratio of e.g. 30% thus means an excess cross sectional area of 70%. In case the inner layer has a diameter varying in the longitudinal direction such as is the case for a corrugated tube, the internal cross sectional area of the insulation device is related to the minimum appearing diameter.

The above mentioned preferred embodiments of the high voltage power cable arrangement are specified in the claims depending from the independent claim related to a high voltage cable arrangement.

The above-mentioned object of the present invention is according to the third aspect of the invention attained by providing a method for providing an insulated high voltage power cable, the method comprises the steps of
providing a plurality of elongated electrical conductor segments;
providing an elongated tubular electrical insulation device;
transporting the plurality of elongated electrical conductor segments and the electrical insulation device unassembled to a site of installation; and
assembling the plurality of elongated electrical conductor segments and the electrical insulation device on site to form an electrical conductor of the plurality of elongated electrical conductor segments and to form an insulated high voltage power cable of the electrical conductor and the tubular electrical insulation device, wherein the step of assembling the plurality of elongated electrical conductor segments and the electrical insulation device comprises inserting the plurality of elongated electrical conductor segments into the prefabricated tubular electrical insulation device.

The site of installation may be the actual location where the cable is to be installed as well as an intermediate assembly site where the cable after the specified transport is prepared for the installation.

The inventors of the present invention have identified that the individual elongated electrical conductor segments and the cable insulation system when being unassembled are more flexible for transportation in relation to an assembled insulated high voltage power cable segment including an inner electrical conductor and a cable insulation system. The electrical conductor segments and the electrical insulation device can be transported separately, thus, a potential weight limitation for transport (e.g. on a truck) can be avoided. Furthermore, longer lengths of the individual elongated electrical conductor segments and the tubular electrical insulation device can be transported compared to an assembled high voltage power cable segment of corresponding dimensions.

By means of the method according to the present invention, the transportation of an insulated high voltage power cable or cable segment is facilitated, especially the transportation of a high voltage power cable or cable segment providing both a large cross-section area of the inner electrical conductor and a long continuous cable segment length. Thus, by means of the method according to the present invention, an increase in the electric power transmitted by, or the current carrying capability of, a power cable, especially a power cable for installation on land, e.g. an underground cable, or subsea, is attained by the increase in cross-section area of the inner electrical conductor, with only little impairing the flexibility of the high voltage power cable during transportation. Thus, the increase of the cross-section area of the inner electrical conductor attained by the method according to the present invention requires only small reduction of the cable segment length for the transportation and thus few additional joints. On the contrary, power cable segments having longer lengths can be transported in an efficient manner by means of the method of the present invention. By means of the method according to the present invention, the number of joints can be kept to a minimum, the installation is made more efficient, the installation costs are reduced, and the reliability of the power transmission or distribution system in operation can be increased.

According to an advantageous embodiment of the method according to the present invention, the step of assembling the plurality of elongated electrical conductor segments and the electrical insulation device comprises placing the plurality of elongated electrical conductor segments alongside one another and in electrical contact to one another to form the electrical conductor. By means of this embodiment, an inner electrical conductor having a large cross-section area is provided in an efficient manner.

According to a further advantageous embodiment of the method according to the present invention, the method is characterized by placing the plurality of elongated electrical conductor segments alongside one another and in electrical contact to one another to assemble the electrical conductor before being inserted into the tubular electrical insulation device. By means of this embodiment, an efficient assembly of the insulated high voltage power cable on site is provided.

According to another advantageous embodiment of the method according to the present invention, the method is characterized by placing the plurality of elongated electrical conductor segments alongside one another and in electrical contact to one another to assemble the electrical conductor inside the tubular electrical insulation device. By means of this embodiment, an efficient assembly of the insulated high voltage power cable on site is provided.

According to yet another advantageous embodiment of the method according to the present invention, the step of transporting the plurality of elongated electrical conductor segments and the electrical insulation device comprises individually winding the plurality of elongated electrical conductor segments and the electrical insulation device unassembled onto at least one drum or roll. By means of this embodiment, an efficient transportation is provided. However, the plurality of elongated electrical conductor segments and the electrical insulation device may also be transported unassembled in other ways, e.g. by being coiled without said drum or roll.

According to further advantageous embodiments of the method according to the present invention, the elongated tubular electrical insulation device is a tubular electrical insulation device according to the present invention, in particular according to any of the preferred embodiments thereof.

The above specified preferred embodiments of the invented method are specified in the claims depending from the independent claim related to a method for providing a flexible insulated high voltage power cable.

Further advantageous embodiments of the method, the high voltage power cable arrangement and the tubular electrical insulation device, respectively, according to the present invention and further advantages with the present invention emerge from the dependent claims and the detailed description of embodiments.

### Brief Description of the Drawings

The present invention will now be described, for exemplary purposes, in more detail by way of embodiments and with reference to the enclosed drawings, in which:
- Fig. 1: is a schematic perspective view of an embodiment of the high voltage power cable arrangement according to the present invention;
- Fig. 2: is a schematic perspective view of a section of an embodiment of the tubular electrical insulation device of an embodiment of the high voltage power cable arrangement according to the present invention;
- Fig. 3a: is a schematic cross-section view of an embodiment of a plurality of elongated electrical conductor segments of an embodiment of the high voltage power cable arrangement according to the present invention;
- Fig. 3b: is a schematic cross-section view of another embodiment of a plurality of elongated electrical conductor segments of an embodiment of the high voltage power cable arrangement according to the present invention;
- Fig. 4a: is a schematic cross-section view illustrating an embodiment of a plurality of elongated electrical conductor segments before assembly;
- Fig. 4b: is a schematic cross-section view illustrating another embodiment of a plurality of elongated electrical conductor segments before assembly;
- Fig. 5: is a flow chart illustrating aspects of an embodiment of the method according to the present invention;
- Fig. 6: is a schematic view illustrating how the plurality of elongated electrical conductor segments and the tubular electrical insulation device may be stored during transported.
- Fig. 7: is a cross section through a detail of the electrically insulating device according to an example of the present invention.
- Fig. 8: is a schematic perspective view of a cable according to a further example of the invention.

### Detailed Description of Embodiments

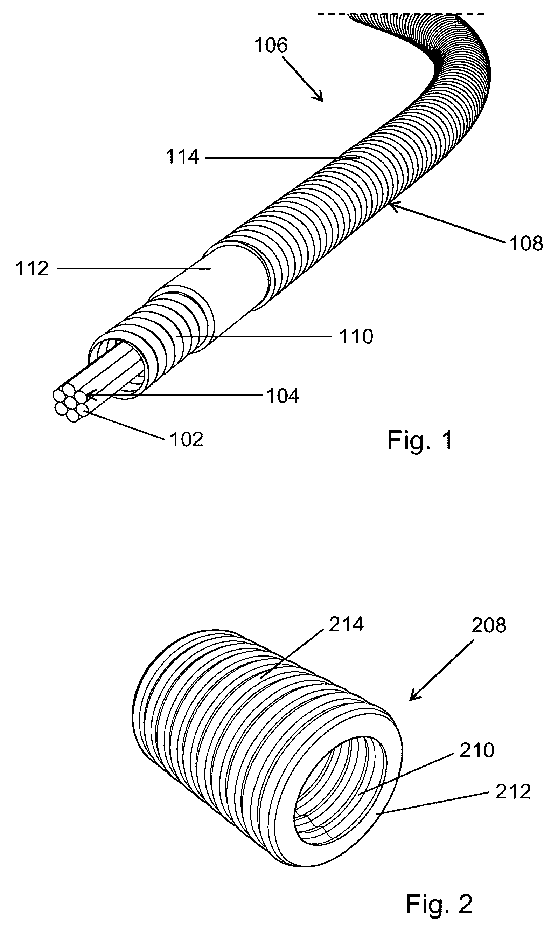

Fig. 1 schematically shows aspects of an embodiment of the high voltage power cable arrangement according to the present invention. In Fig. 1, which is a cutaway view for illustrative purposes, the high voltage power cable arrangement is assembled and is thus in an assembled state. The high voltage power cable arrangement comprises a plurality of elongated electrical conductor segments 102 arranged to be placed alongside one another and in electrical contact to one another to form an inner electrical conductor 104 of a high voltage power cable 106. The high voltage power cable 106 may be a high voltage direct current (HVDC) cable or a high voltage alternating current (HVAC) cable. The high voltage power cable arrangement comprises an elongated tubular electrical insulation device 108 arranged to house and surround the inner electrical conductor 104 formed from the electrical conductor segments 102.

Fig. 2 shows a section of another embodiment of the elongated tubular electrical insulation device 208, which may essentially correspond to the electrical insulation device 108 of Fig. 1. It is to be understood that the electrical insulation device 208 of Fig. 2 has a longer length than shown in Fig. 2. The plurality of elongated electrical conductor segments 102 is insertable into the tubular electrical insulation device 108; 208. The plurality of elongated electrical conductor segments 102 and the electrical insulation device 108; 208 are arranged to be transported unassembled to a site of installation. The plurality of elongated electrical conductor segments 102 and the electrical insulation device 108; 208 are arranged to be assembled on site to form the inner electrical conductor 104 of the plurality of elongated electrical conductor segments 102 and to form an insulated high voltage power cable 106 of the inner electrical conductor 104 and the electrical insulation device 108; 208. The site of installation is the location where the high voltage power cable 106 is to be installed, e.g. on land, such as in the ground. Advantageously, the individual electrical conductor segments 102 and the electrical insulation device 108; 208 are flexible for transportation.

Each electrical insulation device 108; 208 may comprise a circumferential electrically conductive inner layer 110; 210 arranged to house and surround the plurality of elongated electrical conductor segments 102, at least one circumferential electrical insulator 112; 212 located outside of and surrounding the electrically conductive inner layer 110; 210, and a circumferential electrically conductive outer layer 114; 214 located outside of and surrounding the at least one circumferential electrical insulator 112; 212. The inner layer 110; 210 may be corrugated. The outer layer 114; 214 may be corrugated. Each of the electrically conductive inner and outer layers 110, 114; 210, 214 may be covered on the outside and/or on the inside with a semiconductive material. The at least one circumferential electrical insulator 112; 212 may comprise at least one solid or fluid insulator, e.g. an electrically insulating liquid or an electrically insulating gas or gas mixture, e.g. SF₆, or any other suitable insulating gas or gas mixture. The at least one circumferential electrical insulator 112; 212 may comprise at least one circumferential electrically insulating layer, e.g. one or a plurality of solid layers, e.g. made of an electrically insulating material, e.g. a dielectric material. The at least one circumferential electrical insulator 112; 212 may comprise mixtures of the above-mentioned alternatives, e.g. pressurized insulating gas in solid-insulated enclosure. The electrical insulation device 108; 208 may comprise one or more additional circumferential layers arranged to surround the plurality of elongated electrical conductor segments, e.g. at least one circumferential semiconductive layer. Each of the electrically conductive inner and outer layers may be made of a metal or a metal composition, or any other electrically conductive material, e.g. an electrically conductive polymer or polymer composition, e.g. an electrically conductive thermoplastic. In general, the electrically conductive inner and outer layers 110, 114; 210, 214 are arranged to form a protective barrier that protects the at least one circumferential electrical insulator 112; 212 from moisture and mechanical abrasion. In general, the electrical insulation device 108; 208 is arranged to electrically insulate the inner electrical conductor 104 housed therein from the exterior.

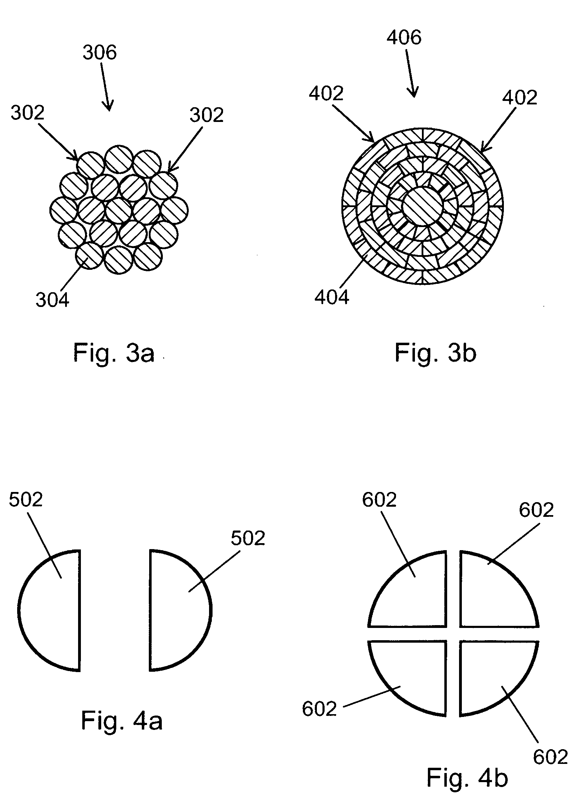

With reference to Figs. 3a-b and 4a-b, a plurality of embodiments of the plurality of elongated electrical conductor segments is schematically illustrated in cross-section. With reference to Figs. 3-ab, each electrical conductor segment 302; 402 may comprise a single electrically conductive strand 304 or a single electrically conductive profile wire 404, or a plurality of electrically conductive strands 304 or a plurality of electrically conductive profile wires 404. Figs. 3a-b schematically illustrate the electrical conductor segments 302; 402 when they have been placed alongside one another and in electrical contact to one another and assembled to an electrical conductor 306; 406. The strands 304 or wires 404 may be made of copper or aluminium, or any other suitable electrically conductive material or material composition.

Figs. 4a-b schematically illustrate further embodiments of the plurality of elongated electrical conductor segments.

In the embodiment of Fig. 4a, the plurality of elongated electrical conductor segments 502 comprises two segments 502 arranged to be placed alongside one another and in electrical contact to one another to form an inner electrical conductor of a high voltage power cable.

In the embodiment of Fig. 4b, the plurality of elongated electrical conductor segments 602 comprises four segments 602 arranged to be placed alongside one another and in electrical contact to one another to form an inner electrical conductor of a high voltage power cable. However, other shapes and numbers of the conductor segments are possible. The plurality of elongated electrical conductor segments may, e.g., be held together by a tape having a longitudinal extension. However, when placed inside the electrical insulation device 108; 208, the electrical conductor segments may be held together without such tape. When forming the inner electrical conductor, the plurality of elongated electrical conductor segments may be arranged together alongside one another in an axial direction and in electrical contact to one another without mechanically compacting the electrical conductor segments together in a radial direction. Alternatively, the electrical conductor segments may be mechanically compacted in a radial direction when the inner electrical conductor is formed.

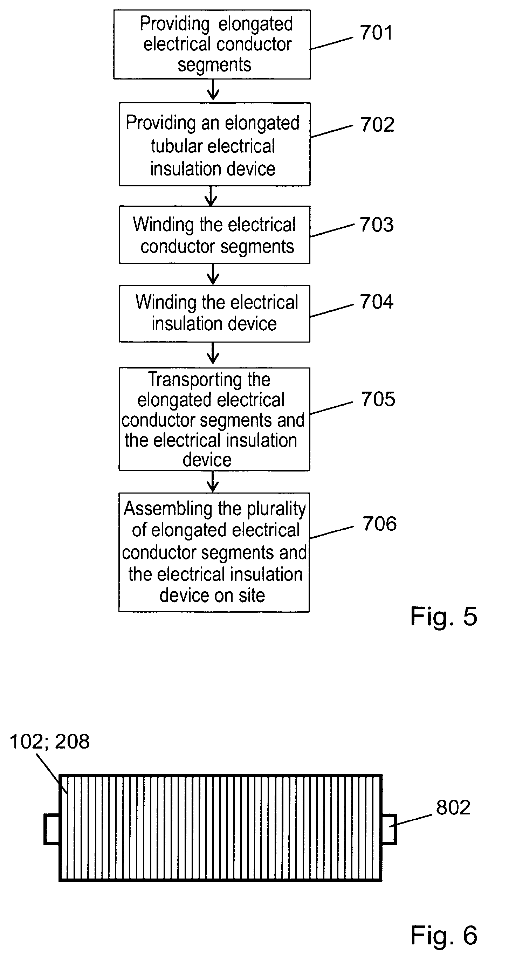

With reference to Figs. 5 and 6, aspects of an embodiment of the method for providing an insulated high voltage power cable according to the present invention are schematically illustrated. The embodiment of the method comprises the steps of providing a plurality of elongated electrical conductor segments, at step 701, and providing an elongated tubular electrical insulation device, at step 702. The electrical conductor segments 102; 302; 402; 502; 602 and the electrical insulation device 108; 208 may correspond to the embodiments disclosed above. The plurality of elongated electrical conductor segments may be individually wound in an unassembled state onto at least one drum or roll, at step 703. The electrical insulation device 108; 208 may be individually wound unassembled onto at least one drum or roll 802, at step 704 (see Fig. 6).

Fig. 6 schematically illustrates an insulation device 108; 208 wound onto a drum or roll 802 in a plurality of layers both in the radial direction and in the longitudinal direction of the drum or roll 802. It is to be understood that each electrical conductor segment 102; 302; 402; 502; 602 may be wound in a corresponding way. The plurality of elongated electrical conductor segments and the electrical insulation device are transported unassembled to a site of installation, at step 705. Thus, the plurality of elongated electrical conductor segments and the electrical insulation device may be transported unassembled wound onto drums or rolls 802 as mentioned above. However, the plurality of elongated electrical conductor segments and the electrical insulation device may be transported unassembled without being wound onto drums or rolls 802. The embodiment of the method comprises the step of assembling the plurality of elongated electrical conductor segments and the electrical insulation device on site to form an electrical conductor of the plurality of elongated electrical conductor segments and to form an insulated high voltage power cable of the electrical conductor and the tubular electrical insulation device, at step 706. The step of assembling the plurality of elongated electrical conductor segments and the electrical insulation device comprises inserting the plurality of elongated electrical conductor segments into the tubular electrical insulation device. The step of assembling the plurality of elongated electrical conductor segments and the electrical insulation device may comprise placing the plurality of elongated electrical conductor segments alongside one another and in electrical contact to one another to form the electrical conductor. The plurality of elongated electrical conductor segments may be placed alongside one another and in electrical contact to one another to assemble the electrical conductor before being inserted into the tubular electrical insulation device. Alternatively, the plurality of elongated electrical conductor segments may be placed alongside one another and in electrical contact to one another to assemble the electrical conductor inside the tubular electrical insulation device.

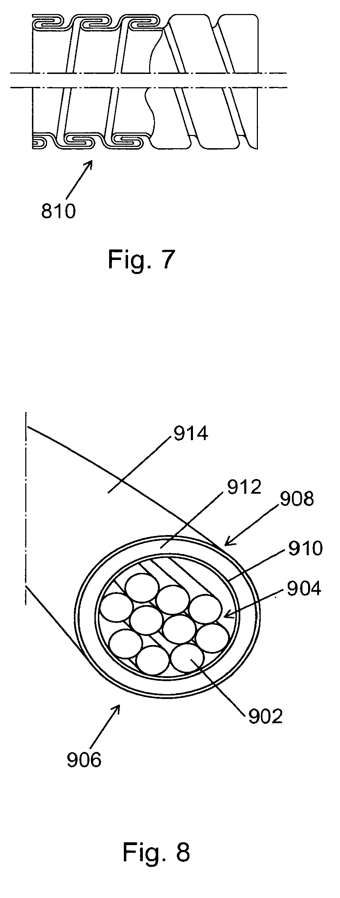

As an alternative to provide the inner metal layer of the electrical insulation device as a corrugated profile as depicted in fig. 2, the inner layer may be a strip wound metallic hose. Fig.7 illustrates an example of such a hose 810.

A further example of the invented insulated high voltage power cable is illustrated in fig. 8. In this example the power transmitted by the cable is 3 GW. The outer metallic layer 914 is the armouring, screen and moisture barrier, but is for clarity reasons depicted simplified. So is also the inner layer 910 of the insulation device which in reality is corrugated or strip wound. In between is the insulation layer 912, which is applied by triple extrusion using the inner layer 910. as the basement for the extrusion.

The conductor device 904 housed within the insulation device 908 consist in this example of ten conductor sections 902, each being an aluminium strand with a diameter of 52mm. The internal diameter of the inner layer is 231 mm and the external diameter of the insulation device is 307 mm. The fill-factor is about 50 %. The conductive area of the conductor device 904 is about 21 000 mm², and with a current density of 0, 45 A/mm² the current will be 9,4 kA. Transmitting at a voltage of 320 kV thereby results in 3 GW.

When the cable is assembled at the factory the cable will be transported in segments of 309 m. It is wound onto a drum at a bending ratio of 1:10,4. The weight of the aluminium strands is 58 kg/m and the weight of the insulation device is 47 kg/m. The complete segment thus has a weight of about 32 t.

When the cable is assembled on site, the conductor segments and the insulation device are transported on separate drums and the bending ratio is 1:9, 4.

In this case the segments can be longer due to the stronger bending ratio, and the segment length in this case is 681 m. Thereby the number of joints is reduced to less than the half.

In fig.8 the conductor segments all have equal diameter, but the cable may alternative comprise conductor segments of different diameter.

In general, High Voltage for AC may be about 1-1.5 kV and above. However, for HVDC applications and systems, High Voltage may be about 72 kV and above, e.g. 320 kV, 500 kV, 800 kV or 1000 kV, and above. HVDC power transmission has an advantage over HVAC power transmission for distances over 100km because of voltage drop and electric stability limits between sending and receiving line ends.

The features of the different embodiments of the apparatus disclosed above may be combined in various possible ways providing further advantageous embodiments. The invention shall not be considered limited to the embodiments illustrated, but can be modified and altered in many ways by one skilled in the art, without departing from the scope of the appended claims.

## Claims

1. A tubular electrical insulation device (108, 208) for forming a high voltage power transmission cable arrangement once a plurality of electrical conductor segments (104; 306; 406) are inserted into the tubular electrical insulation device (108;208; 908), **characterized in that**
the tubular electrical insulation device (108, 208) is flexible, flexible in terms of bendability and comprises an inner circumferential electrically conductive layer (110, 210, 810) for establishing an electric contact to the electrical conductors (104; 306; 406) once inserted into the tubular electrical insulation device (108, 208, 908), and wherein the tubular electrical insulation device (108, 208) is arranged to electrically insulate the electrical conductors (104; 306; 406) from the exterior of the tubular electrical insulation device (108, 208) once inserted into the tubular insulation device (108, 208, 908).

2. The tubular electrical insulation device (108, 208) according to claim 1, **characterized in that** the electrical insulation device (108; 208) is that flexible that it can be coiled on a drum for transportation, and **in that** the inner circumferential electrically conductive layer (110, 210) is dimensionally stable such that its ring-shaped cross-section is maintained when coiled on the drum for transportation.

3. The tubular electrical insulation device (108, 208) according to claim 1 or 2, **characterized in that** the electrical insulation device (108; 208) is that flexible that its bending radius is in a range of 4 to 20 times the outer diameter of the tubular electrical insulation device (108, 208), preferably in the range of 4 to 10 times.

4. The tubular electrical insulation device (108, 208) according to any one of claims 1 to 3, **characterized in that** the inner circumferentially conductive layer (110, 210) is a corrugated tube or a strip wound hose.

5. The tubular electrical insulation device (108, 208) according to claim 1, **characterized in that** the electrical insulation device (108; 208) comprises at least one circumferential electrical insulator (112; 212) located outside of and surrounding the electrically conductive inner layer (110, 210), and a circumferential electrically conductive outer layer (114; 214) located outside of and surrounding the at least one circumferential electrical insulator (112; 212), and **in that** each of the electrically conductive inner and outer layers (110, 114; 210, 214) is made of a metal or a metal composition, or made of an electrically conductive polymer or polymer composition.

6. The tubular electrical insulation device (108, 208) according to claim 5, **characterized in that** the electrically conductive inner and outer layers (110, 114; 210, 214) are arranged to form a protective barrier protecting the at least one circumferential electrical insulator (112; 212) from moisture and mechanical abrasion.

7. The tubular electrical insulation device according to any of claims 1 to 6, **characterized in that** the inner layer has an internal diameter of at least 80 mm, preferably at least 120 mm.

8. A high voltage power transmission cable arrangement comprising
a plurality of elongated electrical conductor segments (102; 302; 402; 502; 602) placed alongside one another and to form an inner electrical conductor (104; 306; 406) of a high voltage power cable, and
an elongated tubular electrical insulation device (108; 208) arranged to house and surround the inner electrical conductor, **characterized**
**in that** the tubular electrical insulation device (108, 208) is according to any of claims 1-7.

9. A high voltage power transmission cable arrangement according to claim 8, **characterized in that** at least one conductor segment (102, 302, 402, 502, 602, 902) of the conductor (104, 306, 406, 904) is in electrical contact with at least another along-side extending conductor segment (102, 302, 402, 502, 602, 902) of the conductor (104, 306, 406, 904).

10. A high voltage power transmission cable arrangement according to any one of claims 8-9, **characterized in that** the plurality of elongated electrical conductor segments (102; 302; 402; 502; 602) is at least partly loosely arranged in relation to the insulation device (108, 208, 908) such that electrical conductor segments (102; 302; 402; 502; 602) can move relative to the insulation device (108, 208, 908) when the high voltage power cable arrangement is bent.

11. A high voltage power transmission cable arrangement according to any one of claims 8-10, **characterized in that** the number of along-side extending conductor segments (102, 302, 402, 502, 602, 902) of the conductor (104, 306, 406, 904) is at least four, and **in that** the conductive cross sectional area of the conductor (104, 306, 406,904) is at least 3 000 mm².

12. A high-voltage power transmission cable arrangement according to any one of claims 8-11, **characterized in that** the internal cross sectional area of the insulation device (108, 208, 908) is the sum of the conductive cross sectional area of the conductor (104, 306, 406, 904) and an excess cross sectional area, which excess cross sectional area is at least 10 % of said internal cross sectional area of the insulation device.

13. A method for providing a flexible insulated high voltage power transmission cable, the method comprising the steps of
providing (701) a plurality of flexible elongated electrical conductor segments;
providing (702) a flexible elongated tubular electrical insulation device according to any of claims 1-7;
transporting (705) the plurality of elongated electrical conductor segments and the electrical insulation device unassembled to a site of installation; and
assembling (706) the plurality of elongated electrical conductor segments and the electrical insulation device on site to form an electrical conductor of the plurality of elongated electrical conductor segments and to form a flexible insulated high voltage power cable of the electrical conductor and the tubular electrical insulation device, wherein the step of assembling the plurality of elongated electrical conductor segments and the electrical insulation device comprises inserting the plurality of elongated electrical conductor segments into the tubular electrical insulation device.

14. A method according to claim 13, **characterized in that** the step of assembling (706) the plurality of elongated electrical conductor segments and the electrical insulation device comprises placing the plurality of elongated electrical conductor segments alongside one another and in electrical contact to one another to form the electrical conductor.

15. A method according to any of the claims 13-14, **characterized in that** the step of transporting (705) the plurality of elongated electrical conductor segments and the electrical insulation device comprises individually winding (703; 704) the plurality of elongated electrical conductor segments and the electrical insulation device unassembled onto at least one drum or roll (802).

## Patentansprüche

1. Rohrförmige Vorrichtung (108, 208) zur elektrischen Isolation, um eine Kabelanordnung zur Übertragung von Hochspannungsleistung zu bilden, sobald mehrere elektrische Leitersegmente (104; 306; 406) in die rohrförmige Vorrichtung (108; 208; 908) zur elektrischen Isolation eingesetzt worden sind, **dadurch gekennzeichnet, dass**
die rohrförmige Vorrichtung (108, 208) zur elektrischen Isolation flexibel ist, flexibel hinsichtlich der Biegsamkeit, und eine innere elektrisch leitende Umfangsschicht (110, 210, 810) zum Herstellen eines elektrischen Kontakts mit den elektrischen Leitern (104; 306; 406), sobald diese in die rohrförmige Vorrichtung (108, 208, 908) zur elektrischen Isolation eingesetzt worden sind, umfasst, wobei die rohrförmige Vorrichtung (108, 208) zur elektrischen Isolation dafür ausgelegt ist, die elektrischen Leiter (104; 306; 406) vor der äußeren Umgebung der rohrförmigen Vorrichtung (108, 208) zur elektrischen Isolation elektrisch zu isolieren, sobald sie in die rohrförmige Isoliervorrichtung (108, 208, 908) eingesetzt worden sind.

2. Rohrförmige Vorrichtung (108, 208) zur elektrischen Isolation nach Anspruch 1, **dadurch gekennzeichnet, dass** die Vorrichtung (108; 208) zur elektrischen Isolation in der Weise flexibel ist, dass sie für den Transport auf eine Trommel gewickelt werden kann, und dass die innere elektrisch leitende Umfangsschicht (110, 210) abmessungsstabil ist, derart, dass ihr ringförmiger Querschnitt aufrecht erhalten bleibt, wenn sie für den Transport auf die Trommel gewickelt ist.

3. Rohrförmige Vorrichtung (108, 208) zur elektrischen Isolation nach Anspruch 1 oder 2, **dadurch gekennzeichnet, dass** die Vorrichtung (108; 208) zur elektrischen Isolation in der Weise flexibel ist, dass ihr Biegeradius in einem Bereich des 4 bis 20-fachen Außendurchmessers der rohrförmigen Vorrichtung (108, 208) zur elektrischen Isolation, vorzugsweise im Bereich des 4 bis 10-fachen Außendurchmessers, liegt.

4. Rohrförmige Vorrichtung (108, 208) zur elektrischen Isolation nach einem der Ansprüche 1 bis 3, **dadurch gekennzeichnet, dass** die innere leitende Umfangsschicht (110, 210) ein geriffeltes Rohr oder ein Wickelschlauch ist.

5. Rohrförmige Vorrichtung (108, 208) zur elektrischen Isolation nach Anspruch 1, **dadurch gekennzeichnet, dass** die Vorrichtung (108; 208) zur elektrischen Isolation wenigstens einen elektrischen Umfangsisolator (112; 212), der sich außerhalb der elektrisch leitenden inneren Schicht (110, 210) befindet und diese umgibt, und eine elektrisch leitende äußere Umfangsschicht (114; 214), die sich außerhalb des wenigstens einen elektrischen Umfangsisolators (112, 212) befindet und diesen umgibt, umfasst und dass sowohl die innere als auch die äußere elektrisch leitende Schicht (110, 114; 210, 214) aus Metall oder einer Metallzusammensetzung hergestellt ist oder aus einem elektrisch leitenden Polymer oder einer elektrisch leitenden Polymerzusammensetzung hergestellt ist.

6. Rohrförmige Vorrichtung (108, 208) zur elektrischen Isolation nach Anspruch 5, **dadurch gekennzeichnet, dass** die innere und die äußere elektrisch leitende Schicht (110, 114; 210, 214) dafür ausgelegt sind, eine Schutzsperre zu bilden, die den wenigstens einen elektrischen Umfangsisolator (112; 212) vor Feuchtigkeit und mechanischem Abrieb schützt.

7. Rohrförmige Vorrichtung zur elektrischen Isolation nach einem der Ansprüche 1 bis 6, **dadurch gekennzeichnet, dass** die innere Schicht einen Innendurchmesser von wenigstens 80 mm, vorzugsweise wenigstens 120 mm, besitzt.

8. Kabelanordnung zur Übertragung von Hochspannungsleistung, die Folgendes umfasst:
mehrere lang gestreckte elektrische Leitersegmente (102; 302; 402; 502; 602), die längsseits nebeneinander angeordnet sind, um einen inneren elektrischen Leiter (104; 306; 406) eines Hochspannungsleistungskabels zu bilden, und
eine lang gestreckte rohrförmige Vorrichtung (108; 208) zur elektrischen Isolation, die dafür ausgelegt ist, den inneren elektrischen Leiter aufzunehmen und zu umgeben, **gekennzeichnet durch**
die rohrförmige Vorrichtung (108, 208) nach einem der Ansprüche 1-7.

9. Kabelanordnung zur Übertragung von Hochspannungsleistung nach Anspruch 8, **dadurch gekennzeichnet, dass** wenigstens ein Leitersegment (102, 302, 402, 502, 602, 902) des Leiters (104, 306, 406, 904) mit wenigstens einem weiteren längsseits verlaufenden Leitersegment (102, 302, 402, 502, 602, 902) des Leiters (104, 306, 406, 904) in elektrischem Kontakt ist.

10. Kabelanordnung zur Übertragung von Hochspannungsleistung nach einem der Ansprüche 8-9, **dadurch gekennzeichnet, dass** die mehreren lang gestreckten elektrischen Leitersegmente (102; 302; 402; 502; 602) in Bezug auf die Isoliervorrichtung (108, 208, 908) wenigstens teilweise lose angeordnet sind, derart, dass sich elektrische Leitersegmente (102; 302; 402; 502; 602) relativ zu der Isoliervorrichtung (108, 208, 908) bewegen können, wenn die Hochspannungsleistungs-Kabelanordnung gebogen wird.

11. Kabelanordnung zur Übertragung von Hochspannungsleistung nach einem der Ansprüche 8-10, **dadurch gekennzeichnet, dass** die Anzahl von längsseits verlaufenden Leitersegmenten (102, 302, 402, 502, 602, 902) des Leiters (104, 306, 406, 904) wenigstens vier ist und dass die leitende Querschnittsfläche des Leiters (104, 306, 406, 904) wenigstens 3000 mm² ist.

12. Kabelanordnung zur Übertragung von Hochspannungsleistung nach einem der Ansprüche 8-11, **dadurch gekennzeichnet, dass** die innere Querschnittsfläche der Isoliervorrichtung (108, 208, 908) die Summe aus der leitenden Querschnittsfläche des Leiters (104, 306, 406, 904) und einer überschüssigen Querschnittsfläche ist, wobei die überschüssige Querschnittsfläche wenigstens 10 % der inneren Querschnittsfläche der Isoliervorrichtung ausmacht.

13. Verfahren zum Bereitstellen eines flexiblen isolierten Hochspannungsleistungs-Übertragungskabels, wobei das Verfahren die folgenden Schritte umfasst:
Bereitstellen (701) mehrerer flexibler, lang gestreckter Leitersegmente;
Bereitstellen (702) einer flexiblen, lang gestreckten rohrförmigen Vorrichtung zur elektrischen Isolation nach einem der Ansprüche 1-7;
Transportieren (705) der mehrere lang gestreckten elektrischen Leitersegmente und der Vorrichtung zur elektrischen Isolation im nicht zusammengefügten Zustand an einen Installationsort; und
Zusammenfügen (706) der mehreren lang gestreckten elektrischen Leitersegmente und der Vorrichtung zur elektrischen Isolation vor Ort, um aus den mehreren lang gestreckten elektrischen Leitersegmenten einen elektrischen Leiter zu bilden und um aus dem elektrischen Leiter und der rohrförmigen Vorrichtung zur elektrischen Isolation ein flexibles isoliertes Hochspannungsleistungskabel zu bilden, wobei der Schritt des Zusammenfügens der mehreren zusammengefügten elektrischen Leitersegmente und der Vorrichtung zur elektrischen Isolation das Einsetzen der mehreren lang gestreckten Leitersegmente in die rohrförmige Vorrichtung zur elektrischen Isolation umfasst.

14. Verfahren nach Anspruch 13, **dadurch gekennzeichnet, dass** der Schritt des Zusammenfügens (706) der mehreren lang gestreckten elektrischen Leitersegmente und der Vorrichtung zur elektrischen Isolation das Anordnen der mehreren lang gestreckten elektrischen Leitersegmente längsseits nebeneinander und in gegenseitigem elektrischem Kontakt umfasst, um den elektrischen Leiter zu bilden.

15. Verfahren nach einem der Ansprüche 13-14, **dadurch gekennzeichnet, dass** der Schritt des Transportierens (705) der mehreren lang gestreckten Leitersegmente und der Vorrichtung zur elektrischen Isolation das individuelle Wickeln (703; 704) der mehreren lang gestreckten elektrischen Leitersegmente und der elektrischen Isoliervorrichtung im nicht zusammengefügten Zustand auf wenigstens eine Trommel oder Rolle (802) umfasst.

## Revendications

1. Dispositif tubulaire d'isolation électrique (108, 208) pour former un agencement de câble de transmission d'alimentation haute tension une fois qu'une pluralité de segments conducteurs électriques (104 ; 306 ; 406) sont insérés dans le dispositif tubulaire d'isolation électrique (108 ; 208 ; 908), **caractérisé en ce que** :
le dispositif tubulaire d'isolation électrique (108, 208) est flexible, flexible en termes d'aptitude au cintrage, et comprend une couche circonférentielle intérieure électriquement conductrice (110, 210, 810) pour établir un contact électrique avec les conducteurs électriques (104 ; 306 ; 406) une fois insérés dans le dispositif tubulaire d'isolation électrique (108, 208, 908), et où le dispositif tubulaire d'isolation électrique (108, 208) est conçu pour isoler électriquement les conducteurs électriques (104 ; 306 ; 406) de l'extérieur du dispositif tubulaire d'isolation électrique (108, 208) une fois insérés dans le dispositif tubulaire d'isolation électrique (108, 208, 908).

2. Dispositif tubulaire d'isolation électrique (108, 208) selon la revendication 1, **caractérisé en ce que** le dispositif d'isolation électrique (108 ; 208) est flexible au point qu'il peut être enroulé sur un tambour pour être transporté, et **en ce que** la couche circonférentielle intérieure électriquement conductrice (110, 210) est dimensionnellement stable de sorte que sa section transversale en forme d'anneau est préservée lorsqu'elle est enroulée sur le tambour pour le transport.

3. Dispositif tubulaire d'isolation électrique (108, 208) selon la revendication 1 ou la revendication 2, **caractérisé en ce que** le dispositif d'isolation électrique (108 ; 208) est flexible au point que son rayon de courbure est compris entre 4 et 20 fois le diamètre externe du dispositif tubulaire d'isolation électrique (108, 208), de préférence entre 4 et 10 fois ce diamètre.

4. Dispositif tubulaire d'isolation électrique (108, 208) selon l'une quelconque des revendications 1 à 3, **caractérisé en ce que** la couche circonférentielle intérieure électriquement conductrice (110, 210) est un tube annelé ou un tuyau formé d'une bande enroulée.

5. Dispositif tubulaire d'isolation électrique (108, 208) selon la revendication 1, **caractérisé en ce que** le dispositif tubulaire d'isolation électrique (108 ; 208) comprend au moins un isolant électrique circonférentiel (112 ; 212) situé à l'extérieur et entourant la couche intérieure électriquement conductrice (110, 210), et une couche circonférentielle extérieure électriquement conductrice (114 ; 214) située à l'extérieur et entourant l'au moins un isolant électrique circonférentiel (112 ; 212), et **en ce que** chacune des couches intérieure et extérieure électriquement conductrices (110, 114 ; 210, 214) est constituée d'un métal ou d'une composition métallique, ou est constituée d'un polymère électriquement conducteur ou d'une composition de polymère.

6. Dispositif tubulaire d'isolation électrique (108, 208) selon la revendication 5, **caractérisé en ce que** les couches intérieure et extérieure électriquement conductrices (110, 114 ; 210, 214) sont agencées pour former une barrière protectrice protégeant l'au moins un isolant électrique circonférentiel (112 ; 212) de l'humidité et de l'abrasion mécanique.

7. Dispositif tubulaire d'isolation électrique selon l'une quelconque des revendications 1 à 6, **caractérisé en ce que** la couche interne a un diamètre interne d' au moins 80 mm, de préférence d'au moins 120 mm.

8. Agencement de câble de transmission d'alimentation haute tension comprenant :
une pluralité de segments allongés de conducteurs électriques (102 ; 302 ; 402 ; 502 ; 602) placés côte à côte et de manière à former un conducteur électrique interne (104 ; 306 ; 406) d'un câble d'alimentation haute tension, et
un dispositif tubulaire d'isolation électrique (108 ; 208) agencé pour loger et entourer le conducteur électrique interne, **caractérisé en ce que**
le dispositif tubulaire d'isolation électrique (108, 208) est conforme à l'une quelconque des revendications 1 à 7.

9. Agencement de câble de transmission d'alimentation haute tension selon la revendication 8, **caractérisé en ce qu'**au moins un segment conducteur (102, 302, 402, 502, 602, 902) du conducteur (104, 306, 406, 904) est en contact électrique avec au moins un autre segment conducteur s'étendant à côté (102, 302, 402, 502, 602, 902) du conducteur (104, 306, 406, 904).

10. Agencement de câble de transmission d'alimentation haute tension selon l'une quelconque des revendications 8 et 9, **caractérisé en ce que** la pluralité de segments allongés de conducteurs électriques (102 ; 302 ; 402 ; 502 ; 602) est au moins partiellement agencée de manière lâche par rapport au dispositif d'isolation (108, 208, 908) de manière à ce que des segments de conducteurs électriques (102 ; 302 ; 402 ; 502 ; 602) puissent bouger par rapport au dispositif d'isolation (108, 208, 908) lorsque l'agencement de câble d'alimentation haute tension est cintré.

11. Agencement de câble de transmission d'alimentation haute tension selon l'une quelconque des revendications 8 à 10, **caractérisé en ce que** le nombre de segments allongés côte à côte de conducteurs électriques (102, 302, 402, 502, 602, 902) du conducteur (104, 306, 406, 904) est au moins quatre, et **en ce que** la surface de la section transversale conductrice du conducteur (104, 306, 406, 904) est au moins 3000 mm².

12. Agencement de câble de transmission d'alimentation haute tension selon l'une quelconque des revendications 8 à 11, **caractérisé en ce que** la section transversale interne du dispositif d'isolation (108, 208, 908) est la somme de la section transversale conductrice du conducteur (104, 306, 406, 904) et d'une section transversale excédentaire, laquelle section transversale excédentaire représente au moins 10 % de la section transversale interne du dispositif d'isolation.

13. Procédé pour fournir un câble de transmission d'alimentation haute tension isolé flexible, le procédé comprenant les étapes suivantes :
pourvoir (701) une pluralité de segments allongés électriquement conducteurs flexibles ;
pourvoir (702) un dispositif tubulaire d'isolation électrique allongé flexible selon l'une quelconque des revendications 1 à 7 ;
transporter (705) la pluralité de segments allongés électriquement conducteurs flexibles et le dispositif d'isolation électrique, non assemblés, jusqu'à un site d'installation ; et
assembler (706) la pluralité de segments allongés électriquement conducteurs et le dispositif d'isolation électrique sur site pour former un conducteur électrique de la pluralité de segments allongés de conducteurs électriques et pour former un câble d'alimentation haute tension isolé flexible du conducteur électrique et du dispositif d'isolation électrique, où l'étape d'assemblage de la pluralité de segments allongés de conducteurs électriques et du dispositif d'isolation électrique comprend d'insérer la pluralité des segments allongés de conducteurs électriques dans le dispositif tubulaire d'isolation électrique.

14. Procédé selon la revendication 13, **caractérisé en ce que** l'étape d'assemblage (706) de la pluralité de segments allongés de conducteurs électriques et du dispositif d'isolation électrique comprend de placer la pluralité de segments allongés de conducteurs électriques côte à côte les uns des autres et en contact électrique les uns des autres pour former le conducteur électrique.

15. Procédé selon l'une quelconque des revendications 13 et 14, **caractérisé en ce que** l'étape de transport (705) de la pluralité de segments allongés de conducteurs électriques et du dispositif d'isolation électrique comprend d'enrouler individuellement (703 ; 704) la pluralité de segments allongés de conducteurs électriques et le dispositif d'isolation électrique, non assemblés, sur au moins un tambour ou une bobine (802).
